# EUROPEAN PATENT SPECIFICATION

(11) **EP 2 921 658 B1**
(45) Date of publication and mention of the grant of the patent: **17.05.2017**
(21) Application number: 14160808.3
(22) Date of filing: 20.03.2014
(51) Int. Cl.: F01D 25/28, F01K 13/02

(54) **Pullable drawer for a turbine and turbine with such a drawer**
Herausziehbare Befestigungsvorrichtung für eine Turbine und Turbine mit einer solchen Vorrichtung
Appareil de montage pouvant être tiré pour une turbine et turbine avec un tel appareil

(43) Date of publication of application: 23.09.2015
(73) Proprietor: General Electric Technology GmbH, 5400 Baden (CH)
(72) Inventor: Gerzner, Stefan, 8615 Freudwil (CH); Rauch, Marc, 4402 Frenkendorf (CH); Vogt, Ernst, CH/5236 Remigen (CH); Lopez, Jose-Manuel, 5073 Gipf-Oberfrick (CH)
(74) Representative: Bernotti, Andrea

(56) References cited:
- WO-A1-2011/026516
- US-A- 4 112 582
- US-A1- 2013 017 082

## Description

### BACKGROUND OF THE INVENTION

The present invention relates to turbines, especially gas turbines. It refers to a pullable drawer according to the preamble of claim 1. It further refers to a gas turbine with such a pullable drawer.

### PRIOR ART

Gas turbines, especially of the stationary or industrial type, usually have an outer housing, which coaxially extends along a machine axis and surrounds a concentric inner carrier, which carries the vanes of the turbine. The outer housing and the inner carrier are separate units, each comprising an upper part and a lower part, both having the form of a half cylinder, which are connected by means of a flanged connection at a common parting plane.

For positioning the inner carrier relative to the outer housing a mechanical connection is established between both parts by means of a plurality of drawers, which extend at certain places through the outer housing to make mechanical contact with the inner carrier.

Document US 3,628,884 A discloses a rotary machine, such as a turbine. The machine comprises a tubular outer casing and a tubular inner casing disposed within the outer casing. The inner casing encompasses a rotating rotor structure. Hot motive gases, derived from fuel combustion, are expanded as they flow through the machine to drive the rotor structure, as well known in the art.

A plurality of apertures is radially disposed in the outer casing and a plurality of corresponding key slots is disposed on the periphery of the inner casing. After the outer and inner casings are aligned concentrically relative to the axis of rotation of the rotor, a plurality of eccentric bushing structures are radially disposed in the apertures and adjusted to fit the slots to support the inner casing concentrically relative to the axis of rotation of the rotor.

Document US 6,224, 332 B1 discloses a turbine having an outer structural shell and an inner shell supported by the outer shell. The inner shell carries an array of nozzles and forming parts of first and second stages, respectively, of the turbine.

To connect the inner and outer shells to one another, each of the forward and aft portions of the inner shell are provided with circumferentially spaced recesses. Support pins pass through access openings through the outer shell for connection with the forward portion of the inner shell. Similar pins interconnect the outer shell with the aft portion of the inner shell. Preferably, the pins lie at eight pin locations in each radial plane and are spaced approximately 45° one from the other about the rotor axis. The support pins are also spaced from the horizontal split line of the inner shell. The support pins include an enlarged head having a bolt circle with a plurality of bolt openings, a cylindrical shank and end projections. The support pins support the inner shell from the outer shell for radial and axial expansion and contraction, with the pins carrying only circumferential loadings.

Document US 2009/0226313 A1 discloses a turbine casing structure having an outer casing, and an inner casing disposed in the outer casing, comprising a bush disposed in a concave portion formed in the inner casing; an eccentric shaft inserted into a communication hole formed in the outer casing, and having a front end disposed in contact with the bush; and a fixing member disposed in engagement with the eccentric shaft, and fixed to the outer casing.

Document US 2013/0017082 A1 describes an alignment assembly for mounting and aligning an inner shell within an outer shell. The alignment assembly generally includes a first bushing and a second bushing configured to be received within at least one of an arm extending radially between the inner and outer shells and a boss of the outer shell. The first bushing may generally have an eccentric configuration and the second bushing may include an eccentric portion extending within the first bushing. Additionally, the alignment assembly may include a connection member extending within at least one of said first bushing and said second bushing.

Other assemblies of inner vane carriers and outer housings or casings of turbine are known from documents DE 25 32 537 A1 and DE 42 30 235 A1. Document US4112582 discloses further a pullable drawer comprising a first and a second part whereby a slight loosening of a lock nut allows a longitudinal movement of the first part in its housing-side guide part by rotation of the second part. The known solutions have some severe disadvantages:
- Due to a lack of mechanical decoupling, requirements on machining precision are very high in order to avoid an unwanted force impact on sensitive portions of the pullable drawers;
- Although designs of pullable drawers accessible from outside do exist, these existing designs show often problems due to unwanted force impact on sensitive portions of the drawer.

### SUMMARY OF THE INVENTION

It is an object of the present invention to provide pullable drawers for turbine housing assemblies, which avoid the disadvantages of the known designs and are easily assembled and disassembled in a very fast and failure-proof way.

It is another object of the invention to provide a gas turbine with such a pullable drawer.

These and other objects are obtained by a pullable drawer according to Claim 1 and a gas turbine according to Claim 9.

The pullable drawer according to the invention is provided for removably protruding in a radial direction into an outer housing of a turbine, especially gas turbine, in order to make mechanical contact with an inner carrier being concentrically arranged within said outer housing, whereby said pullable drawer has an essentially cylindrical body, which extends along a longitudinal drawer axis. Said pullable drawer is divided along said longitudinal drawer axis into at least separate first and second parts, which first and second parts are coupled with each other by means of a releasable mechanical joint and said mechanical joint has at least one degree of freedom for the movement of said first and second parts relative to each other. It is characterised in that said at least one degree of freedom is along a second axis perpendicular to said longitudinal drawer axis.

According to another embodiment of the pullable drawer of the invention said mechanical joint is a dovetail joint having a dovetail joint axis, and said dovetail joint axis is identical with said second axis.

According to a further embodiment of the pullable drawer of the invention said dovetail joint comprises a pin and a dovetail for receiving said pin in a sliding movement along said dovetail joint axis, said pin is provided at said first part of said pullable drawer, and said dovetail is provided at said second part of said pullable drawer.

According to another embodiment of the pullable drawer of the invention a spring is arranged within said dovetail joint between said pin and said dovetail in order to exert a separating force in axial direction between said first and second parts of said pullable drawer.

According to just another embodiment of the pullable drawer of the invention said spring is a leave spring, and a spring groove extending along said dovetail joint axis for receiving said leave spring is provided at the front face of the pin of the dovetail joint.

According to a further embodiment of the pullable drawer of the invention the leave spring comprises means for laterally fixing said leave spring in said spring groove.

According to another embodiment of the pullable drawer of the invention said fixing means comprises a vertical pin, which fits into a hole at the bottom of said spring groove.

According to just another embodiment of the pullable drawer of the invention said first part of said pullable drawer comprises a flat head the plane of which is oriented perpendicular to said dovetail joint axis.

The gas turbine according to the invention comprises a hollow cylindrical outer housing, which is coaxial with and extends along, a machine axis, and which is divided at a parting plane into an upper part and a lower part, and further comprises an inner carrier, which is concentrically surrounded by said outer housing, and which is divided at said parting plane into an upper part and a lower part, whereby said outer housing and said inner carrier are mechanically coupled by a plurality of pullable drawers, which extend through said outer housing to contact said inner carrier.

It is characterized in that said pullable drawers are drawers according to the invention.

According to an embodiment of the inventive gas turbine said pullable drawers are arranged pair wise and symmetrically with regard to said parting plane.

According to another embodiment of the inventive gas turbine said upper part and lower part of said outer housing are connected in said parting plane by means of a flanged connection, and said pairs of pullable drawers are each arranged within said flanged connection.

According to just another embodiment of the inventive gas turbine said upper part and lower part of said inner carrier are connected in said parting plane by means of a flanged connection, and said pairs of pullable drawers have mechanical contact with said inner carrier at said flanged connection.

According to a further embodiment of the inventive gas turbine radially extending holding blocks are provided at said flanged connection of said inner carrier, and each pair of pullable drawers makes mechanical contact with a respective holding block at opposite sides of said holding block.

According to another embodiment of the inventive gas turbine said pullable drawers are retained within said flanged connection by means of covers mounted on the outside of said flanged connection.

### BRIEF DESCRIPTION OF THE DRAWINGS

The present invention is now to be explained more closely by means of different embodiments and with reference to the attached drawings.
- Fig. 1: shows part of a gas turbine assembly according to an embodiment of the invention with an outer housing and an inner carrier (Fig. 1 (a)), and an enlarged detail of the flanged connections of the outer housing comprising pullable drawers according to an embodiment of the invention (Fig. 1 (b));
- Fig. 2: shows the inner carrier of Fig. 1 and the mechanical contact with the pairs of pullable drawers (Fig. 2(a)), and one side of the inner casing with one pair of pullable drawers in an enlarged detail (Fig. 2(b));
- Fig. 3: shows a pullable drawer according to an embodiment of the invention, which is used in the assemblies of Fig. 1 and 2;
- Fig. 4: shows in detail the enclosure of a pair of pullable drawers in the flanged connection of the outer housing;
- Fig. 5: is a photograph of the assembled pullable drawer of Fig. 3 in comparison with a writing pen;
- Fig. 6: is a photograph of the disassembled pullable drawer of Fig. 5 in comparison with a writing pen; and
- Fig. 7: is a photograph of an enlarged detail of the disassembled pullable drawer of Fig. 5.

### DETAILED DESCRIPTION OF DIFFERENT EMBODIMENTS OF THE INVENTION

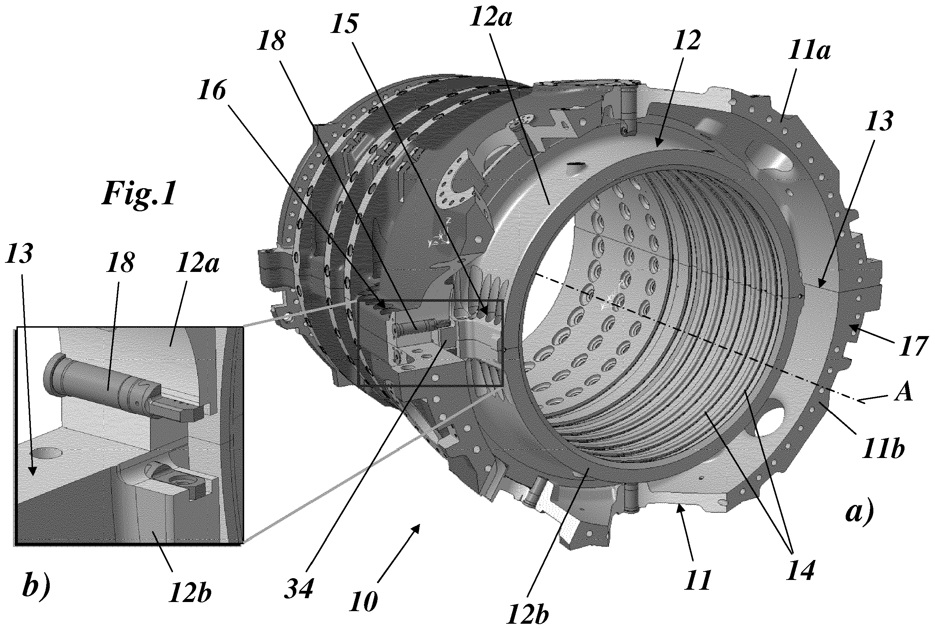

Fig. 1 shows part of a gas turbine assembly according to an embodiment of the invention. The assembly of gas turbine 10 of Fig. 1 (a) comprises a section of a hollow cylindrical outer housing 11, which is coaxial with and extends along, a machine axis A (the axis of rotation of a rotor not shown). The outer housing 11 is divided at a parting plane 13, which contains the machine axis A, into an upper part 11 a and a lower part 11 b. Gas turbine 10 further comprises an inner carrier 12, which is provided for carrying a plurality of vanes, which are mounted in respective circumferential vane receiving grooves 14 and extend radially into the interior of inner carrier 12. Inner carrier 12 is concentrically surrounded by outer housing 11, and is divided at said parting plane 13 into an upper part 12a and a lower part 12b.

Upper part 11 a and lower part 11 b of outer housing 11 are connected in parting plane 13 by means of a first flanged connection 16. Upper part 12a and lower part 12b of inner carrier 12 are connected in parting plane 13 by means of a second flanged connection 15. Outer housing 11 and inner carrier 12 are mechanically coupled by a plurality of pullable drawers 18, which extend through outer housing 11 to make mechanical contact with inner carrier 12. Only one pair of pullable drawers 18 is shown in Fig. 1 (a) and the enlarged detail of Fig. 1 (b).

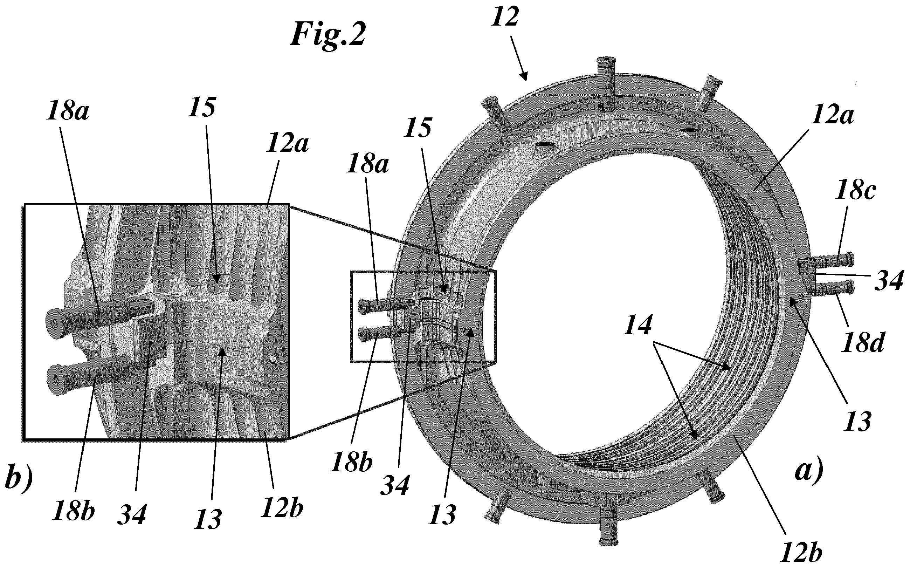

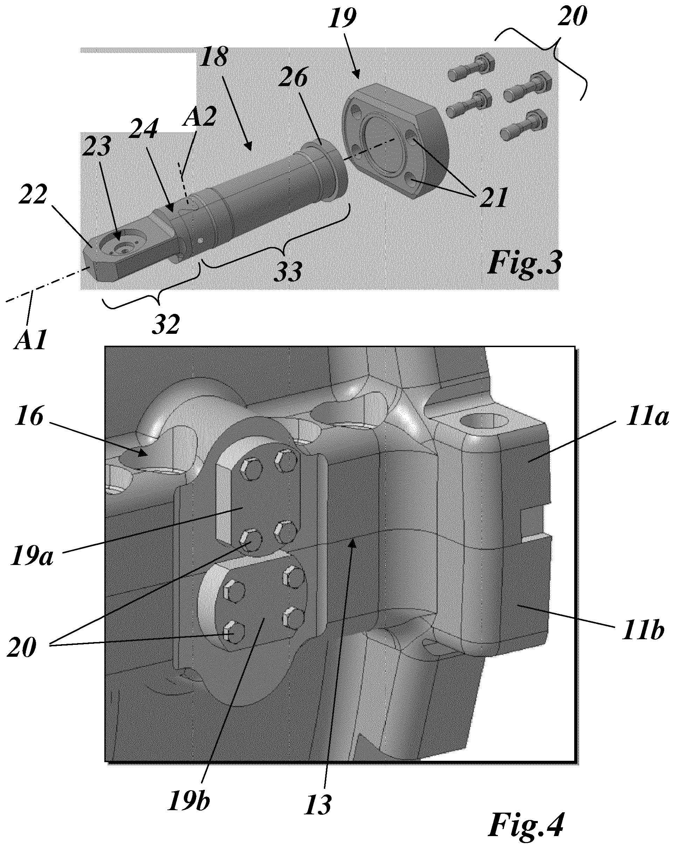

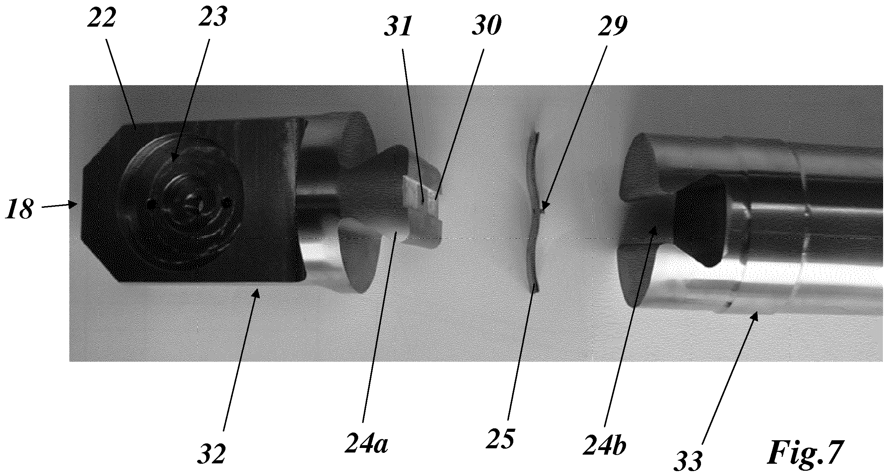

Fig. 2 shows the inner carrier 12 of Fig. 1 and its mechanical contact with the two pairs of pullable drawers 18a,b and 18c,d (Fig. 2(a)), and one side of the inner casing with one pair of pullable drawers 18a,b in an enlarged detail (Fig. 2(b)). Pullable drawers 18a,b and 18c,d are mounted with a rear (cylindrical) part (33 in Fig. 3 and 5-7) in respective bores in the flanged connection 16 of the outer housing (see Fig. 1) and make contact on opposite sides of a holding block 34, which is part of flanged connection 15 of inner carrier 12, by means of a head portion (32 in Fig. 3 and 5-7). Mounted pullable drawers 18 are - as shown in Fig. 4 - enclosed in their bores in flanged connection 16 by means of covers 19a and 19b, which are each bolted to flanged connection 16 by four screws 20 extending through respective screw holes 21 (see Fig. 3).

The technical problems that had to be solved are:
- A mechanical decoupling of independent portions of a pullable drawer;
- temperatures up to 500 °C must be tolerated;
- ambient fluid pressure up to 30 bar must be tolerated;
- a suppression of probable vibrations should be possible;
- the drawer should be maintenance friendly, have few parts, be of robust design, and be failure-proof.

The basic idea of the invention is now a mechanical decoupling of the pullable drawers 18a-d, which protrude into the outer housing 11 of gas turbine 10. At the same time a suppression of vibrations may take place within the drawers.

According to the present invention and shown in Fig. 3 and 5-7 pullable drawer 18 or 18a-d is divided along its longitudinal drawer axis A1 into at least separate first and second parts 32, 33, namely a head portion 32 and a rear part 33, which first and second parts 32, 33 are coupled with each other by means of a releasable mechanical joint 24. According to the embodiment shown in Fig. 3 and 5-7 the mechanical joint 24 has at least one degree of freedom for the movement of said first and second parts 32, 33 relative to each other. In the embodiment shown this at least one degree of freedom is along a second axis A2 perpendicular to said longitudinal drawer axis A1 (see Fig. 3).

In the embodiment shown, said mechanical joint is a dovetail joint 24 having a dovetail joint axis, which is identical with said second axis A2. Dovetail joint 24 comprises on one hand a pin 24a and on the other hand a dovetail 24b for receiving said pin 24a in a sliding movement along said dovetail joint axis A2. Pin 24a is formed at said first part or head portion 32 of pullable drawer 18, while dovetail 24b is formed at said second or rear part 33 of pullable drawer 18.

To have a tight fit of dovetail joint 24 at the same time successfully suppress unwanted vibration, a spring 25 is arranged within dovetail joint 24 between pin 24a and dovetail 24b. Spring 25 exerts a separating force in axial direction between first and second parts 32, 33 of pullable drawer 18. Spring 25 is a leave spring comprising a stack of separate identical leaves. A spring groove 30 extending along dovetail joint axis A2 for receiving leave spring 25 is provided at the front face of pin 24a of dovetail joint 24. Leave spring 25 is laterally fixed in spring groove 30 by fixing means 29 in form of a vertical pin 29, which fits into a hole 31 at the bottom of spring groove 30.

At the end of rear part 33 of pullable drawer 18 a shoulder 26 is provided, which fits into a respective diameter step of the bore, which receives the drawer in order to have a defined axial position of drawer 18 within flanged connection 16. Drawer 18 is fixed in this position by cover 19 or 19a,b, respectively.

Head portion 32 of drawer 18 comprises a flat head 22 the plane of which is oriented perpendicular to dovetail joint axis A2. With flat head 22 drawer 18 abuts against holding block 34 of flange connection 15 of inner carrier 12, thereby fixing inner carrier 12 in circumferential direction. A circular recess 23 in flat head 22 may be used to fix inner carrier 12 in a radial direction.

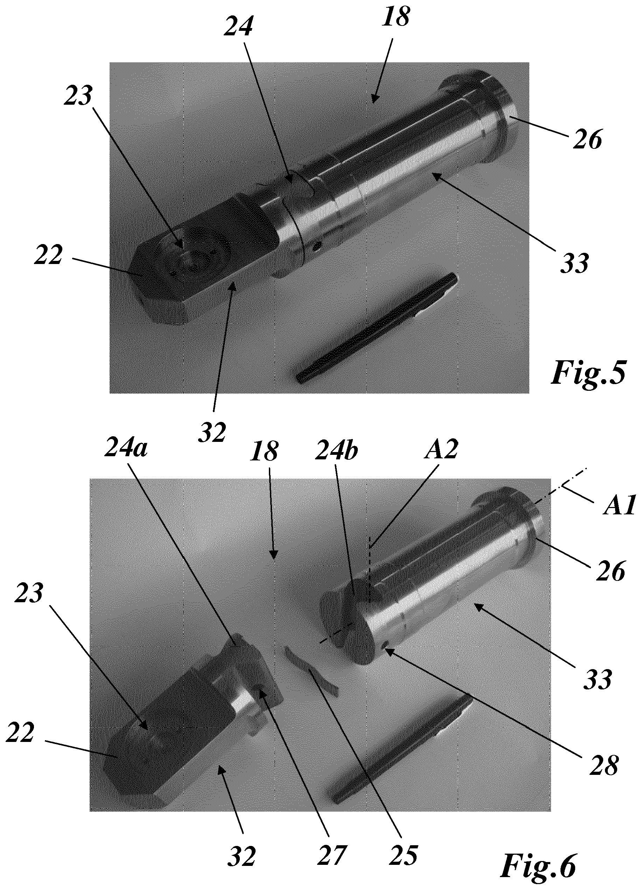

As can be seen in Fig. 6, dovetail joint 24a,b may be provided with bores 27 and 28 in order to fix the joint by a bolt extending through these bores.

The drawer according to the invention thus comprises three portions:

### Portion 1:

The rear part 33 of the pullable drawer 18, which represents a carrier of the head portion 32 of pullable drawer 18. Its purpose is to keep the head portion 32 in place axially, without suppressing a degree of freedom in the movement. This function is called "mechanical decoupling".

### Portion 2:

The head portion 32 of pullable drawer 18. Its purpose is to fulfil the actual function of the feature. In the embodiment shown in the Figures it has to define a certain position for inner carrier 12 relative to the outer housing 11 of the gas turbine 10.

### Portion 3:

Since the mechanical decoupling allows a certain movement in all degrees of freedom, unwanted vibrations are likely. The movement is suppressed by leave spring 25, which is also part of the solution.

The advantages of the present invention are:
- Problems with rigid drawers with unwanted force impact are solved;
- assembly and disassembly is easy, very fast and failure proof, which is very important for such a feature;
- the pullable drawer of this invention is the first feature, which combines support drawers and accessibility from outside without time-consuming removing of burners, pipes etc., like it's done today to remove pullable drawers.

However, the invention is not limited to those drawers of the embodiment shown. Any item, which protrudes into the gas turbine and has to carry forces within a certain scope and shall be pullable from outside, could be equipped with such a mechanical decoupling.

### LIST OF REFERENCE NUMERALS

- 10: gas turbine
- 11: outer housing
- 11 a: upper part (outer housing
- 11 b: lower part (outer housing)
- 12: inner carrier
- 12a: upper part (inner carrier)
- 12b: lower part (inner carrier)
- 13: parting plane
- 14: vane receiving groove
- 15: flanged connection (inner carrier)
- 16: flanged connection (outer housing)
- 17: connecting face (flange)
- 18: drawer (pullable)
- 18a-d: drawer
- 19: cover
- 19a,b: cover
- 20: screw
- 21: screw hole
- 22: head
- 23: recess (circular)
- 24: dovetail joint
- 24a: pin
- 24b: dovetail
- 25: leave spring
- 26: shoulder
- 27,28: bore
- 29: pin
- 30: spring groove
- 31: hole
- 32: head portion (drawer)
- 33: rear part (drawer)
- 34: holding block
- A: machine axis
- A1: drawer axis (longitudinal)
- A2: dovetail joint axis (perpendicular)

## Claims

1. Pullable drawer (18) for removably protruding in a radial direction into an outer housing (11) of a turbine, especially gas turbine (10), in order to make mechanical contact with an inner carrier (12) being concentrically arranged within said outer housing (11), whereby said pullable drawer (18) has an essentially cylindrical body (32, 33), which extends along a longitudinal drawer axis (A1), wherein said pullable drawer (18) is divided along said longitudinal drawer axis (A1) into at least separate first and second parts (32, 33), which first and second parts (32, 33) are coupled with each other by means of a releasable mechanical joint (24) **characterized in that** said mechanical joint (24) has at least one degree of freedom for the movement of said first and second parts (32, 33) relative to each other and **in that** said at least one degree of freedom is along a second axis (A2) perpendicular to said longitudinal drawer axis (A1).

2. Pullable drawer as claimed in Claim 1, **characterized in that** said mechanical joint is a dovetail joint (24) having a dovetail joint axis (A2), and that said dovetail joint axis (A2) is identical with said second axis.

3. Pullable drawer as claimed in Claim 2, **characterized in that** said dovetail joint (24) comprises a pin (24a) and a dovetail (24b) for receiving said pin (24a) in a sliding movement along said dovetail joint axis (A2), that said pin (24a) is provided at said first part (32) of said pullable drawer (18), and that said dovetail (24b) is provided at said second part (33) of said pullable drawer (18).

4. Pullable drawer as claimed in Claim 3, **characterized in that** a spring (25) is arranged within said dovetail joint (24) between said pin (24a) and said dovetail (24b) in order to exert a separating force in axial direction between said first and second parts (32, 33) of said pullable drawer (18).

5. Pullable drawer as claimed in Claim 4, **characterized in that** said spring is a leave spring (25), and that a spring groove (30) extending along said dovetail joint axis (A2) for receiving said leave spring (25) is provided at the front face of the pin (24a) of the dovetail joint (24).

6. Pullable drawer as claimed in Claim 5, **characterized in that** the leave spring (25) comprises means (29) for laterally fixing said leave spring (25) in said spring groove (30).

7. Pullable drawer as claimed in Claim 6, **characterized in that** said fixing means comprises a vertical pin (29), which fits into a hole (31) at the bottom of said spring groove (30).

8. Pullable drawer as claimed in Claim 2, **characterized in that** said first part (32) of said pullable drawer (18) comprises a flat head (22) the plane of which is oriented perpendicular to said dovetail joint axis (A2).

9. Gas turbine (10), comprising a hollow cylindrical outer housing (11), which is coaxial with and extends along, a machine axis (A), and which is divided at a parting plane (13) into an upper part (11 a) and a lower part (11 b), and further comprising an inner carrier (12), which is concentrically surrounded by said outer housing (11), and which is divided at said parting plane (13) into an upper part (12a) and a lower part (12b), whereby said outer housing (11) and said inner carrier (12) are mechanically coupled by a plurality of pullable drawers (18a-d), which extend through said outer housing (11) to contact said inner carrier (12), **characterized in that** said pullable drawers (18a-d) are drawers according to one of the Claims 1-8.

10. Gas turbine as claimed in Claim 9, **characterized in that** said pullable drawers (18a-d) are arranged pair wise and symmetrically with regard to said parting plane (13).

11. Gas turbine as claimed in Claim 10, **characterized in that** said upper part (11 a) and lower part (11b) of said outer housing (11) are connected in said parting plane (13) by means of a flanged connection (16), and that said pairs of pullable drawers (18a,b; 18c,d) are each arranged within said flanged connection (16).

12. Gas turbine as claimed in Claim 11, **characterized in that** said upper part (12a) and lower part (12b) of said inner carrier (12) are connected in said parting plane (13) by means of a flanged connection (15), and that said pairs of pullable drawers (18a,b; 18c,d) have mechanical contact with said inner carrier (12) at said flanged connection (15).

13. Gas turbine as claimed in Claim 12, **characterized in that** radially extending holding blocks (34) are provided at said flanged connection (15) of said inner carrier (12), and that each pair of pullable drawers (18a,b; 18c,d) makes mechanical contact with a respective holding block (34) at opposite sides of said holding block (34).

14. Gas turbine as claimed in Claim 11, **characterized in that** said pullable drawers (18a-d) are retained within said flanged connection (16) by means of covers (19; 19a,b) mounted on the outside of said flanged connection (16).

## Patentansprüche

1. Herausziehbares Einschubelement (18), das dazu vorgesehen ist, in einer radialen Richtung entnehmbar in ein äußeres Gehäuse (11) einer Turbine, speziell einer Gasturbine (10), vorzustehen, um einen mechanischen Kontakt mit einem inneren Träger (12), der innerhalb des äußeren Gehäuses (11) konzentrisch angeordnet ist, herzustellen, wobei das herausziehbare Einschubelement (18) einen im Wesentlichen zylindrischen Körper (32, 33) besitzt, der sich entlang einer longitudinalen Einschubelementachse (A1) erstreckt, wobei das herausziehbare Einschubelement (18) entlang der longitudinalen Einschubelementachse (A1) in mindestens ein separates erstes und zweites Teil (32, 33) getrennt ist, wobei das erste und das zweite Teil (32, 33) durch eine lösbare mechanische Verbindung (24) miteinander gekoppelt sind, **dadurch gekennzeichnet, dass** die mechanische Verbindung (24) mindestens einen Freiheitsgrad für die Bewegung des ersten und des zweiten Teils (32, 33) relativ zueinander besitzt und dass der mindestens eine Freiheitsgrad entlang einer zweiten Achse (A2) senkrecht zu der longitudinalen Einschubelementachse (A1) ist.

2. Herausziehbares Einschubelement nach Anspruch 1, **dadurch gekennzeichnet, dass** die mechanische Verbindung eine Schwalbenschwanzverbindung (24) ist, die eine Schwalbenschwanzverbindungsachse (A2) besitzt, und dass die Schwalbenschwanzverbindungsachse (A2) mit der zweiten Achse zusammenfällt.

3. Herausziehbares Einschubelement nach Anspruch 2, **dadurch gekennzeichnet, dass** die Schwalbenschwanzverbindung (24) einen Stift (24a) und einen Schwalbenschwanz (24b) zum Aufnehmen des Stifts (24a) in einer Gleitbewegung entlang der Schwalbenschwanzverbindungsachse (A2) umfasst, dass der Stift (24a) bei dem ersten Teil (32) des herausziehbaren Einschubelements (18) vorgesehen ist und dass der Schwalbenschwanz (24b) bei dem zweiten Teil (33) des herausziehbaren Einschubelements (18) vorgesehen ist.

4. Herausziehbares Einschubelement nach Anspruch 3, **dadurch gekennzeichnet, dass** eine Feder (25) innerhalb der Schwalbenschwanzverbindung (24) zwischen dem Stift (24a) und dem Schwalbenschwanz (24b) angeordnet ist, um eine Trennkraft in axialer Richtung zwischen dem ersten und dem zweiten Teil (32, 33) des herausziehbaren Einschubelements (18) auszuüben.

5. Herausziehbares Einschubelement nach Anspruch 4, **dadurch gekennzeichnet, dass** die Feder eine Blattfeder (25) ist und dass eine Federnut (30), die sich entlang der Schwalbenschwanzverbindungsachse (A2) zum Aufnehmen der Blattfeder (25) erstreckt, bei der Vorderfläche des Stifts (24a) der Schwalbenschwanzverbindung (24) vorgesehen ist.

6. Herausziehbares Einschubelement nach Anspruch 5, **dadurch gekennzeichnet, dass** die Blattfeder (25) eine Vorrichtung (29) zum seitlichen Fixieren der Blattfeder (25) in der Federnut (30) umfasst.

7. Herausziehbares Einschubelement nach Anspruch 6, **dadurch gekennzeichnet, dass** die Fixiervorrichtung einen vertikalen Stift (29), der in ein Loch (31) in dem Boden der Federnut (30) passt, umfasst.

8. Herausziehbares Einschubelement nach Anspruch 2, **dadurch gekennzeichnet, dass** das erste Teil (32) des herausziehbaren Einschubelements (18) einen Flachkopf (22), dessen Ebene zu der Schwalbenschwanzverbindungsachse (A2) senkrecht orientiert ist, umfasst.

9. Gasturbine (10), die ein hohles zylindrisches äußeres Gehäuse (11) umfasst, das zu einer Maschinenachse (A) koaxial angeordnet ist und sich entlang dieser erstreckt und das bei einer Trennebene (13) in einen oberen Teil (11a) und einen unteren Teil (11b) unterteilt ist, und die ferner einen inneren Träger (12) umfasst, der von dem äußeren Gehäuse (11) konzentrisch umgeben ist und der bei der Trennebene (13) in einen oberen Teil (12a) und einen unteren Teil (12b) unterteilt ist, wobei das äußere Gehäuse (11) und der innere Träger (12) durch mehrere herausziehbare Einschubelemente (18a-d) mechanisch gekoppelt sind, die sich durch das äußere Gehäuse (11) erstrecken, um einen Kontakt mit dem inneren Träger (12) herzustellen, **dadurch gekennzeichnet, dass** die herausziehbaren Einschubelemente (18a-d) Einschubelemente nach einem der Ansprüche 1-8 sind.

10. Gasturbine nach Anspruch 9, **dadurch gekennzeichnet, dass** die herausziehbaren Einschubelemente (18a-d) paarweise und bezüglich der Trennebene (13) symmetrisch angeordnet sind.

11. Gasturbine nach Anspruch 10, **dadurch gekennzeichnet, dass** der obere Teil (11a) und der untere Teil (11b) des äußeren Gehäuses (11) in der Trennebene (13) durch eine Flanschverbindung (16) verbunden sind und dass die Paare herausziehbarer Einschubelemente (18a,b; 18c,d) jeweils innerhalb der Flanschverbindung (16) angeordnet sind.

12. Gasturbine nach Anspruch 11, **dadurch gekennzeichnet, dass** der obere Teil (12a) und der untere Teil (12b) des inneren Trägers (12) in der Trennebene (13) durch eine Flanschverbindung (15) verbunden sind und dass die Paare herausziehbarer Einschubelemente (18a,b; 18c,d) bei der Flanschverbindung (15) mit dem inneren Träger (12) in einem mechanischen Kontakt sind.

13. Gasturbine nach Anspruch 12, **dadurch gekennzeichnet, dass** sich radial erstreckende Halteblöcke (34) bei der Flanschverbindung (15) des inneren Trägers (12) vorgesehen sind und dass jedes Paar herausziehbarer Einschubelemente (18a,b; 18c,d) mit einem entsprechenden Halteblock (34) an gegenüberliegenden Seiten des Halteblocks (34) einen mechanischen Kontakt herstellt.

14. Gasturbine nach Anspruch 11, **dadurch gekennzeichnet, dass** die herausziehbaren Einschubelemente (18a-d) durch Abdeckungen (19; 19a,b), die an der Außenseite der Flanschverbindung (16) befestigt sind, innerhalb der Flanschverbindung (16) gehalten werden.

## Revendications

1. Tiroir pouvant être tiré (18) destiné à faire saillie de manière amovible dans une direction radiale dans un logement extérieur (11) d'une turbine, en particulier d'une turbine à gaz (10), de façon à établir un contact mécanique avec un support intérieur (12) agencé de manière concentrique à l'intérieur dudit logement extérieur (11), grâce à quoi ledit tiroir pouvant être tiré (18) présente un corps sensiblement cylindrique (32, 33), qui s'étend le long de l'axe longitudinal du tiroir (A1), dans lequel ledit tiroir pouvant être tiré (18) est divisé le long dudit axe longitudinal du tiroir (A1) en au moins des première et deuxième parties distinctes (32, 33), lesquelles première et deuxième parties (32, 33) sont couplées l'une à l'autre au moyen d'un joint mécanique amovible (24), **caractérisé en ce que** ledit joint mécanique (24) présente au moins un degré de liberté pour le déplacement desdites première et deuxième parties (32, 33) l'une par rapport à l'autre, et **en ce que** ledit ou lesdits degrés de liberté se situent le long d'un deuxième axe longitudinal (A2) perpendiculaire audit axe longitudinal du tiroir (A1).

2. Tiroir pouvant être tiré selon la revendication 1, **caractérisé en ce que** ledit joint mécanique est un joint en queue d'aronde (24) qui présente un axe de joint de queue d'aronde (A2), et **en ce que** ledit axe de joint de queue d'aronde (A2) est identique audit deuxième axe.

3. Tiroir pouvant être tiré selon la revendication 2, **caractérisé en ce que** ledit joint en queue d'aronde (24) comprend une broche (24a) et une queue d'aronde (24b) destinée à recevoir ladite broche (24a) dans un déplacement en coulissement le long dudit axe de joint de queue d'aronde (A2), **en ce que** ladite broche (24a) est prévue au niveau de ladite première partie (32) dudit tiroir pouvant être tiré (18), et **en ce que** ladite queue d'aronde (24b) est prévue au niveau de ladite deuxième partie (33) dudit tiroir pouvant être tiré (18).

4. Tiroir pouvant être tiré selon la revendication 3, **caractérisé en ce qu'**un ressort (25) est agencé à l'intérieur dudit joint en queue d'aronde (24) entre ladite broche (24a) et ladite queue d'aronde (24b) de façon à exercer une force de séparation dans la direction axiale entre lesdites première et deuxième parties (32, 33) dudit tiroir pouvant être tiré (18).

5. Tiroir pouvant être tiré selon la revendication 4, **caractérisé en ce que** ledit ressort est un ressort à lame (25), et **en ce qu'**une rainure de ressort (30) qui s'étend le long dudit axe de joint de queue d'aronde (A2), destinée à recevoir ledit ressort à lame (25), est prévue au niveau de la face avant de la broche (24a) du joint en queue d'aronde (24).

6. Tiroir pouvant être tiré selon la revendication 5, **caractérisé en ce que** le ressort à lame (25) comprend un moyen (29) destiné à fixer de manière latérale ledit ressort à lame (25) dans ladite rainure de ressort (30).

7. Tiroir pouvant être tiré selon la revendication 6, **caractérisé en ce que** ledit moyen de fixation comprend une broche verticale (29), qui s'insère dans un trou (31) au niveau du fond de ladite rainure de ressort (30).

8. Tiroir pouvant être tiré selon la revendication 2, **caractérisé en ce que** ladite première partie (32) dudit tiroir pouvant être tiré (18) comprend une tête plate (22) dont le plan est orienté de manière perpendiculaire par rapport audit axe de joint de queue d'aronde (A2).

9. Turbine à gaz (10), comprenant un logement extérieur cylindrique creux (11), coaxial avec un axe de machine (A) et qui s'étend le long de celui-ci, et qui est divisé au niveau d'un plan de séparation (13) en une partie supérieure (11a) et une partie inférieure (11b), et comprenant en outre un support intérieur (12), entouré de manière concentrique par ledit logement extérieur (11), et divisé au niveau dudit plan de séparation (13) en une partie supérieure (12a) et une partie inférieure (12b), grâce à quoi ledit logement extérieur (11) et ledit support intérieur (12) sont couplés de manière mécanique par une pluralité de tiroirs pouvant être tirés (18a - d), qui s'étendent à travers ledit logement extérieur (11) de façon à entrer en contact avec ledit support intérieur (12), **caractérisée en ce que** lesdits tiroirs pouvant être tirés (18a - d) sont des tiroirs selon l'une quelconque des revendications 1 à 8.

10. Turbine à gaz selon la revendication 9, **caractérisée en ce que** lesdits tiroirs pouvant être tirés (18a - d) sont agencés en paires et de manière symétrique par rapport audit plan de séparation (13).

11. Turbine à gaz selon la revendication 10, **caractérisée en ce que** ladite partie supérieure (11a) et ladite partie inférieure (11b) dudit logement extérieur (11), sont connectées dans ledit plan de séparation (13) au moyen d'une connexion à bride (16), et **en ce que** lesdites paires de tiroirs pouvant être tirés (18a, b ; 18c, d) sont chacune agencées à l'intérieur de ladite connexion à bride (16).

12. Turbine à gaz selon la revendication 11, **caractérisée en ce que** ladite partie supérieure (12a) et ladite partie inférieure (12b) dudit support intérieur (12), sont connectées dans ledit plan de séparation (13) au moyen d'une connexion à bride (15), et **en ce que** lesdites paires de tiroirs pouvant être tirés (18a, b ; 18c, d) sont en contact mécanique avec ledit support intérieur (12) au niveau de ladite connexion à bride (15).

13. Turbine à gaz selon la revendication 12, **caractérisée en ce que** des blocs de maintien s'étendant de manière radiale (34), sont prévus au niveau de ladite connexion à bride (15) dudit support intérieur (12), et **en ce que** chaque paire de tiroirs pouvant être tirés (18a, b ; 18c, d) établit un contact mécanique avec un bloc de maintien respectif (34) au niveau des côtés opposés dudit bloc de maintien (34).

14. Turbine à gaz selon la revendication 11, **caractérisée en ce que** lesdits tiroirs pouvant être tirés (18a - d) sont retenus à l'intérieur de ladite connexion à bride (16) au moyen de couvercles (19 ; 19a, b) montés sur l'extérieur de ladite connexion à bride (16).
